**Europäisches Patentamt**

**European Patent Office**

**Office européen des brevets**

(19)

(11) Veröffentlichungsnummer: **0 533 009 B1**

# (12) EUROPÄISCHE PATENTSCHRIFT

(45) Veröffentlichungstag der Patentschrift: **18.10.95**

(21) Anmeldenummer: **92115268.2**

(22) Anmeldetag: **07.09.92**

(51) Int. Cl.6: **C08J 9/34**, C08J 9/02, //C08L75/04

(54) **Verfahren zur Herstellung von Verbundkörpern und die so erhaltenen Verbundkörper.**

(30) Priorität: **19.09.91 DE 4131203**

(43) Veröffentlichungstag der Anmeldung: **24.03.93 Patentblatt 93/12**

(45) Bekanntmachung des Hinweises auf die Patenterteilung: **18.10.95 Patentblatt 95/42**

(84) Benannte Vertragsstaaten: **AT BE DE FR**

(56) Entgegenhaltungen:
**EP-A- 0 451 685**
**DE-A- 2 651 400**
**US-A- 3 691 265**

(73) Patentinhaber: **BAYER AG**

**D-51368 Leverkusen (DE)**

(72) Erfinder: **Neuhaus, Alfred**
**Habichtgasse 2**
**W-5090 Leverkusen 1 (DE)**
Erfinder: **Luckas, Bruno**
**Petersbergstrasse 4**
**W-5090 Leverkusen 1 (DE)**
Erfinder: **Avar, Géza, Dr.**
**H.-v.-Helmholtz-Strasse 26**
**W-5090 Leverkusen 1 (DE)**

**Beschreibung**

Die Erfindung betrifft ein neues Verfahren zur Herstellung von Verbundkörpern aus Polyurethanschaumstoffen und als Deckschicht dienenden Flächengebilden durch Formverschäumung von zu Polyurethanschaumstoff ausreagierenden Reaktionsgemischen in geschlossenen Formen, deren Innenwände zumindest teilweise mit solchen als Deckschichtmaterial dienenden Flächengebilden ausgekleidet worden sind, und die nach diesem Verfahren erhaltenen Verbundkörper.

Die Herstellung von Verbundkörpern durch Anschäumen von Polyurethan an Deckschichten ist grundsätzlich bekannt. Sie erfolgt im allgemeinen durch Formverschäumung eines reaktions- und schaumfähigen Gemisches aus organischen Polyisocyanaten, Verbindungen mit gegenüber Isocyanatgruppen reaktionsfähigen Gruppen und den üblichen Hilfs- und Zusatzmitteln, wobei die Deckschicht vorher in das Formwerkzeug eingelegt und in geeigneter Weise befestigt, d.h. wobei die Forminnenwand vorzugsweise zumindest teilweise mit dem als Deckschicht dienenden Flächengebilde ausgekleidet wird.

Durch geeignete Wahl der Ausgangskomponente, insbesondere durch geeignete Wahl ihres Molekulargewichts und ihrer Funktionalität ist es dabei möglich, sowohl weiche als auch halbharte als auch harte Formkörper herzustellen.

Ein grundsätzliches Problem bei der Herstellung von derartigen Verbundkörpern ist die Haftung des zum Polyurethanschaumstoff ausreagierenden Reaktionsgemischs an der Deckschicht. Wesentliche Fortschritte in dieser Beziehung wurden beispielsweise durch die Bereitstellung von geeigneten Haftvermittlern erzielt. So wird beispielsweise die Haftung von zu Polyurethan ausreagierenden Gemischen an Metallen durch Vorbehandlung der Metalloberfläche mittels wäßriger Polyurethandispersionen wesentlich verbessert (DE-AS 2 633 764).

Erneute Probleme bezüglich der Haftung der Polyurethanschaumstoffe an den Deckschichten ergaben sich neuerdings im Zusammenhang mit der Umstellung von FCKW-getriebenen Polyurethanschaumstoffen auf solche, bei deren Herstellung Wasser/Kohlendioxid als Treibmittel verwendet wird, und die eine weitaus schlechtere Haftung an den üblicherweise als Deckschichten eingesetzten Materialien aufweisen, Überraschenderweise wurde jetzt gefunden, daß durch den Zusatz von kristallwasserhaltigen Salzen, vorzugsweise solchen Salzen, die eine in Wasser bei 20°C unter 5 g/l liegende Löslichkeit aufweisen, eine deutlich verbesserte Haftung auch von Wasser-getriebenen Schaumstoffen erzielt werden kann.

Die Verwendung von kristallwasserhaltigen Salzen als Zusatzmittel bei der Herstellung von Polyurethankunststoffen ist zwar an sich bekannt, jedoch ist dem einschlägigen Stand der Technik keinerlei Hinweis auf die genannte haftungsverbessernde Wirkung der Zusatzmittel zu entnehmen:
Die GB-PS 1 147 695 beschreibt die Verwendung von kristallwasserhaltigen Salzen bei der Herstellung von nicht-geschäumten Polyurethanen ohne jeden Bezug auf die erfindungsgemäß interessierenden Zusammenhänge. Die DE-OS 1 806 404 beschreibt die Verwendung von kristallwasserhaltigen Salzen zur Herstellung von Schaumstoffformkörpern mit besonders gleichförmigen Eigenschaften, ebenfalls ohne jeden Bezug auf die hier interessierenden Haftungsprobleme. Die gleiche Aussage rechtfertigt sich im Hinblick auf DE-OS 2 651 400, die die Verwendung von kristallwasserhaltigen Verbindungen in Einkomponentensystemen zum Gegenstand hat.

Gemaß einem eigenen älteren Vorschlag (Deutsches Patentanmeldung P 40 13 141.6) werden kristallwasserhaltige Salze als Treibmittel bei der Herstellung von Formschaumstoffen mit kompakter Oberfläche verwendet, wobei bei der Herstellung dieser Formschaumstoffe keinerlei Deckschichten mitverwendet werden.

Gegenstand der Erfindung ist ein Verfahren zur Herstellung von Verbundkörpern aus Polyurethanschaumstoffen und als Deckschicht dienenden Flächengebilden durch Formverschäumung eines zu einem Polyurethanschaumstoff ausreagierenden Reaktionsgemischs aus

a) einer Polyisocyanatkomponente, bestehend aus mindestens einem aromatischen Polyisocyanat,
b) einer Reaktivkomponente, bestehend aus mindestens einer organischen Verbindung mit mindestens zwei gegenüber Isocyanatgruppen reaktionsfähigen Gruppen,
c) Treibmitteln und
d) weiteren Hilfs- und Zusatzmitteln

unter Einhaltung einer Isocyanatkennzahl von 75 bis 1500, unter Verwendung von Formen, deren Innenwände zumindest teilweise vor Befüllen der Form mit einem als Deckschicht dienenden Flächengebilde ausgekleidet worden sind, dadurch gekennzeichnet, daß man solche Reaktionsgemische verwendet, die als Zusatzmittel d) kristallwasserhaltige Salze in einer Menge von 0,1 bis 15 Gew.-%, bezogen auf das Gewicht der Komponente b), gegebenenfalls neben weiteren Hilfs- und Zusatzmitteln enthalten.

Im Rahmen der Erfindung sind unter "Polyurethanschaumstoffen" nicht nur die bekannten, schaumförmigen, Urethangruppen aufweisenden Umsetzungsprodukte aus Polyisocyanaten und Polyhydroxylverbindungen sondern vielmehr auch andere Schaumstoffe auf Polyisocyanat-Basis wie beispielsweise Isocyanurat-modifizierte Polyurethanschaumstoffe und auch Urethangruppen-freie Polyharnstoffschaumstoffe zu verstehen, wie sie aus organischen Polyisocyanaten und organischen Polyaminen erhalten werden können. Vorzugsweise handelt es sich jedoch bei den erfindungsgemäßen Verfahrensprodukten um echte, d.h. Urethangruppen aufweisende, gegebenenfalls Isocyanurat-modifizierte Polyurethane.

Als Polyisocyanat-Komponente a) kommen beliebige aromatische Polyisocyanate mit einem NCO-Gehalt von mindestens 20 Gew.-% in Betracht. Beispiele hierfür sind 2,4-Diisocyanatotoluol, dessen technischen Gemische mit 2,6-Diisocyanatotoluol oder, bevorzugt, die bekannten Polyisocyanate oder Polyisocyanatgemische der Diphenylmethanreihe wie sie beispielsweise durch Phosgenierung von Anilin/Formaldehyd-Kondensaten und gegebenenfalls destillative Aufarbeitung der Phosgenierungsprodukte zugänglich sind. Diese für das erfindungsgemäße Verfahren besonders gut geeigneten Polyisocyanate oder Polyisocyanatgemische weisen im allgemeinen einen Gehalt an Disocyanatodiphenylmethan-Isomeren von 50 bis 100 Gew.-% auf und bestehen im wesentlichen zum Rest aus höherfunktionellen Homologen dieser Diisocyanate. Die in diesen Gemischen vorliegenden Diisocyanate bestehen im wesentlichen aus 4,4'-Diisocyanatodiphenylmethan in Abmischung mit bis zu 60 Gew.-%, bezogen auf die Gesamtmenge der Diisocyanate, an 2,4'-Diisocyanatodiphenylmethan und gegebenenfalls geringen Mengen an 2,2'-Diisocyanatodiphenylmethan. Auch Urethan-, Carbodiimid- oder Allophanat-modifizierte Derivate dieser Polyisocyanate können als Polyisocyanatkomponente a) eingesetzt werden.

Bei der Reaktivkomponente b) handelt es sich um mindestens eine organische Verbindung mit mindestens zwei gegenüber Isocyanatgruppen reaktionsfähigen Gruppen. Im allgemeinen handelt es sich um Gemische von mehreren derartigen Verbindungen. Vorzugsweise handelt es sich bei den einzelnen Verbindungen der Komponente b) um die aus der Polyurethanchemie an sich bekannten organischen Polyhydroxylverbindungen.

In Betracht kommen insbesondere die an sich bekannten Polyhydroxypolyether des Molekulargewichtsbereichs 400 bis 10 000, vorzugsweise 1500 bis 6000, die pro Molekül mindestens 2, vorzugsweise 2 bis 6 Hydroxylgruppen aufweisen. Derartige Polyhydroxypolyether werden in an sich bekannter Weise durch Alkoxylierung von geeigneten Startermolekülen erhalten. Geeignete Startermoleküle sind beispielsweise Wasser, Propylenglykol, Glycerin, Trimethylolpropan, Sorbit, Rohrzucker, Aminoalkohole wie Ethanolamin oder Diethanolamin oder aliphatische Amine wie n-Hexylamin oder 1,6-Diaminohexan bzw. beliebige Gemische derartiger Startermoleküle. Geeignete Alkoxylierungsmittel sind insbesondere Propylenoxid und gegebenenfalls Ethylenoxid, welches im Gemisch mit Propylenoxid oder auch separat in getrennten Reaktionsschritten während der Alkoxylierungsreaktion zur Anwendung gelangen kann.

Auch die an sich bekannten Modifizierungsprodukte derartiger Polyetherpolyole, d.h. die bekannten Pfropfpolyether auf Basis der beispielhaft genannten einfachen Polyetherpolyole bzw. die bekannten Polyadditionsprodukte als Füllstoffe enthaltende Polyetherpolyole, beispielsweise Polyhydrazocarbonamide als disperse Füllstoffe enthaltende Polyetherpolyole sind geeignet.

Auch die üblichen Polyesterpolyole des Molekulargewichtsbereichs 400 bis 10.000, vorzugsweise 1500 bis 4000, die pro Molekül mindestens zwei, vorzugsweise 2 bis 6 Hydroxylgruppen aufweisen, sind als Komponente b) bzw. als Teil der Komponente b) geeignet. Geeignete Polyesterpolyole sind die an sich bekannten Umsetzungsprodukte von überschüssigen Mengen an mehrwertigen Alkoholen der als Startermoleküle bereits beispielhaft genannten Art mit mehrbasischen Säuren wie beispielsweise Bernsteinsäure, Adipinsäure, Phthalsäure, Tetrahydrophthalsäure oder beliebigen Gemischen derartiger Säuren.

Auch niedermolekulare Polyhydroxylverbindungen, d.h. solche eines Molekulargewichtsbereichs von 62 bis 399 sind als Komponente b) bzw. als Teil der Komponente b) geeignet. Hierzu gehören die aus der Polyurethanchemie an sich bekannten niedermolekularen, Hydroxylgruppen aufweisenden Kettenverlängerungsmittel bzw. Vernetzer wie Alkanpolyole der bereits oben als Startermoleküle beispielhaft genannten Art oder auch niedermolekulare Polyetherpolyole, wie sie durch Alkoxylierung dieser Startermoleküle zugänglich sind.

Die Komponente b) besteht, wie bereits ausgeführt, vorzugsweise aus organischen Polyhydroxylverbindungen bzw. aus Gemischen organischer Polyhydroxylverbindungen der beispielhaft genannten Art, wobei als Komponente b) sowohl Gemische der beispielhaft genannten höhermolekularen Polyhydroxylverbindungen mit den beispielhaft genannten niedermolekularen Polyhydroxylverbindungen als auch niedermolekulare Polyhydroxylverbindungen der beispielhaft genannten Art allein als auch höhermolekulare Polyhydroxyverbindungen der beispielhaft genannten Art allein in Betracht kommen.

Die Reaktivkomponente b) kann, zumindest zum Teil, auch aus Aminogruppen aufweisenden Verbindungen bestehen. Hierzu gehören sowohl Aminopolyether des Molekulargewichtsbereichs 400 bis 12.000, vorzugsweise 2000 bis 8000 mit mindestens zwei aliphatisch und/oder aromatisch gebundenen primären und/oder sekundären, vorzugsweise primären Aminogruppen als auch niedermolekulare Polyamine des Molekulargewichtsbereichs 60 bis 399.

Zu den Aminopolyethern gehören solche der in EP-B-00 81 701, US-PS 3 654 370, US-PS 3 155 728, US-PS 3 236 895, US-PS 3 808 250, US-PS 3 975 428, US-PS 4 016 143, US-PS 3 865 791 oder DE-OS 2 948 491 genannten Art. Zu den niedermolekularen Polyaminen gehören beispielsweise aliphatische Polyamine wie Ethylendiamin, 1,6-Diaminohexan oder vorzugsweise aromatische Polyamine, insbesondere alkylsubstituierte Phenylendiamine wie 1-Methyl-3,5-diethyl-2,4-diaminobenzol, 1-Methyl-3,5-diethyl-2,6-diaminobenzol, 4,6-Dimethyl-2-ethyl-1,3-diaminobenzol, 3,5,3',5'-Tetraethyl-4,4'-diaminodiphenylmethan, 3,5,3',5'-Tetraisopropyl-4,4'-diaminodiphenylmethan, 3,5-Diethyl-3',5'-diisopropyl-4,4'-diaminodiphenylmethan oder beliebige Gemische derartiger Verbindungen.

Als Treibmittel c) werden beim erfindungsgemäßen Verfahren niedrigsiedende organische, FCKW-freie Flüssigkeiten, wie insbesondere die isomeren Butane, Pentane und/oder Hexane, vorzugsweise jedoch Wasser verwendet. Außerdem in Betracht kommen Stickstoff-abspaltende Verbindungen wie Azo-dicarbonamid, Azo-bis-isobutyronitril, Kohlendioxid-abspaltende Treibmittel wie Pyrokohlensäureester und -anhydride (US-PS 4 070 310) oder in den Reaktionskomponenten, insbesondere der Komponente mit gegenüber Isocyanatgruppen reaktionsfähigen Gruppen gelöste Treibmittel wie beispielsweise Luft.

Die Gesamtmenge der eingesetzten Treibmittel richtet sich selbstverständlich nach der jeweils angestrebten Dichte der Formkörper.

Erfindungswesentlich ist die Mitverwendung von kristallwasserhaltigen Salzen als Zusatzmittel d), die in Mengen von 0,1 bis 15 Gew.-%, vorzugsweise 1 bis 10 Gew.-%, bezogen auf das Gewicht der Komponente b), vorzugsweise in Form von Pulvern von einer maximalen Teilchengröße von 300, insbesondere 150 $\mu$m zum Einsatz gelangen.

Der Begriff "kristallwasserhaltige Salze" soll im Rahmen der vorliegenden Erfindung auch Oxidhydrate oder Hydroxide von Schwermetallen umfassen. Geeignete Salze sind insbesondere kristallwasserhaltige Salze, die in Wasser bei 20°C eine unter 5 g/l liegende Löslichkeit aufweisen. Derartige Salze weisen im allgemeinen auch in den eingesetzten Polyolabmischungen die erforderliche geringe Löslichkeit auf. Bevorzugt werden Salze, die nur wenig hygroskopisch sind und sich ohne Probleme in eine für die Verarbeitung vorzuziehende feine Pulverform mahlen lassen. Vorzugsweise werden die Salze in Form von Pulvern eingesetzt, die zumindest zu 70 % ein Sieb mit der Maschenweite 100 $\mu$m passieren.

In Betracht kommen Oxidhydrate oder Hydroxide von Aluminium, Barium, Calcium, Eisen, Kupfer, Magnesium, kristallwasserhaltige Salze von anorganischen oder organischen Säuren wie Kohlensäure, Salzsäure, Schwefelsäure, Flußsäure, Borsäure, Oxalsäure, Ameisensäure, Essigsäure, Milchsäure, Benzoesäure mit Metallen wie Aluminium, Barium, Calcium, Chrom, Eisen, Kalium, Kupfer, Magnesium, Mangan, Natrium, Zink, Zinn, Zirkonium wie z.B. $AlKSO_4 \times 12H_2O$, $Ba(OH)_2 \times 8H_2O$, $BaC_2O_4 \times 2H_2O$, $CaC_4H_4O_6 \times 4H_2O$, $CaC_2O_4 \times H_2O$, $CaSO_4 \times 2H_2O$, $CeSO_4 \times 4H_2O$, $Ce(C_2O_4)_3 \times 10H_2O$, $CuSO_4 \times 5H_2O$, $Na_2B_4O_7 \times 10H_2O$, $NH_4MgAsO_4 \times 6H_2O$, $MgCO_3 \times 3H_2O$, $KHCO_3 \times MgCO_3 \times 4H_2O$, $Al_2O_3 \times 2SiO_2 \times 2H_2O$, $4MgCO_4 \times Mg(OH)_2 \times 4H_2O$.

Besonders bevorzugt werden jedoch kristallwasserhaltige Salze der Phosphorsäure, Diphosphorsäure und von polymeren Phosphorsäuren eingesetzt, wie z.B. $Mg_3(PO_4)_2 \times 8H_2O$, $AlPO_4 \times 3H_2O$, $CaHPO_4 \times 2H_2O$, $Ca(H_2PO_4)_2 \times H_2O$, $Mg_3(PO_4)_2 \times 8H_2O$, $Cu_2P_2O_7 \times 3H_2O$, $FePO_4 \times 2H_2O$, $Na_2HPO_4 \times 12H_2O$, $Na_2HPO_4 \times 2H_2O$, $Na_2H_2P_2O_6 \times 6H_2O$, $Na_3PO_4 \times 12H_2O$, $Mg(H_2PO_4)_2 \times 4H_2O$, $MgHPO_4 \times 2H_2O$ und insbesondere $MgNH_4PO_4 \times 6H_2O$. Das letztgenannte Magnesiumammoniumphosphat mit 6 Mol Kristallwasser ist besonders bevorzugt.

Weitere, gegebenenfalls neben den erfindungswesentlichen kristallwasserhaltigen Salzen einzusetzende Hilfs- und Zusatzstoffe d) sind solche der an sich bekannten Art, beispielsweise die Isocyanat-Polyadditionsreaktion beschleunigenden Katalysatoren wie tert. Amine wie Triethylendiamin, N,N'-Dimethylbenzylamin oder N,N'-Dimethylcyclohexylamin bzw. metallorganische Verbindungen, insbesondere Zinnverbindungen wie Zinn(II)-octoat oder Dibutylzinndilaurat. Auch Trimerisierungskatalysatoren wie beispielsweise Alkaliacetate wie Natrium- oder Kaliumacetat, Alkaliphenole, wie Natriumphenolat oder Natriumtrichlorphenolat oder 2,4,6-Tris-(dimethylamino-methyl)-phenol oder auch Bleiniaphthenat, Bleibenzoat oder Bleioctoat können erfindungsgemäß zum Einsatz gelangen, falls an die Herstellung von Isocyanuratgruppen aufweisenden Polyurethanschaumstoffen gedacht ist.

Weitere, gegebenenfalls mitzuverwendende Hilfs- und Zusatzstoffe d) sind beispielsweise die an sich bekannten Schaumstabilisatoren, beispielsweise jene auf Basis von Polyether-modifizierten Polysiloxanen.

Zur Durchführung des erfindungsgemäßen Verfahrens wird im allgemeinen so vorgegangen, daß die Ausgangskomponenten b) bis d) vorab miteinander vermischt und anschließend mit der Polyisocyanatkomponente a) vereinigt werden. Die letztgenannte Durchmischung erfolgt beispielsweise unter Verwendung von Rührwerksmischern oder vorzugsweise unter Verwendung der üblichen Hochdruck-Mischaggregate, wie sie üblicherweise zur Herstellung von Polyurethanschaumstoffen verwendet werden.

Unmittelbar nach der Herstellung des Reaktionsgemischs erfolgt die Befüllung der Form, in der die als Deckschicht vorgesehenen Flächengebilde eingelegt sind.

4

Bei diesen Flächengebilden handelt es sich beispielsweise um Profile oder Folien aus Kunststoffen wie gegebenenfalls glasfaserverstärktem Polyester- oder Polyepoxidharz, weichgemachtem PVC oder aus Textilien, Metallen wie beispielsweise Eisenblech oder Aluminium oder aus Holz, wobei die Flächengebilde schaumstoffseitig oftmals mit einem haftvermittelnden Primer beschichtet sind. Als Haftvermittler eignen sich beispielsweise die gegebenenfalls Silane enthaltenden Polyurethandispersionen gemäß DE-AS 2 633 764.

Die Deckschicht kann durch Tiefziehen mit oder ohne Vakuumunterstützung oder durch mechanische Verformung der Werkzeugoberfläche angepaßt sein. Es ist aber auch möglich, den Schäumdruck des Reaktionsgemisches zur Verformung einer nicht vorgeformten Folie zu verwenden.

Üblicherweise werden geschlossene Formwerkzeuge verwendet, wobei die Menge des in die Form eingetragenen Reaktionsgemisches der angestrebten Rohdichte der Formkörper angepaßt wird. Die Menge des Reaktionsgemisches wird so gewählt, daß sie frei verschäumt mindestens das 1,2-fache des Formvolumens ausfüllen würde. Neben diesem Einstufen-Verfahren kann das erfindungsgemäße Verfahren auch nach dem Semiprepolymerprinzip durchgeführt werden. Hierbei wird die Gesamtmenge der Polyisocyanatkomponente a) mit einem Teil der Komponente b), beispielsweise unter Einhaltung eines NCO/OH-Äquivalentverhältnisses von mindestens 3:1, vorzugsweise mindestens 8:1 zu einem NCO-Semiprepolymeren umgesetzt, welches anschließend mit einem Gemisch der verbleibenden Komponenten b) bis d) zur Reaktion gebracht wird. Dabei können selbstverständlich zur Herstellung der NCO-Semiprepolymeren Polyhydroxylverbindungen b) eingesetzt werden, die von den Polyhydroxylverbindungen b), die anschließend mit den NCO-Semiprepolymeren abgemischt werden, verschieden sind.

Bei allen Varianten des erfindungsgemäßen Verfahrens werden die Mengenverhältnisse der Einzelkomponenten so gewählt, daß eine Isocyanatkennzahl von 75 bis 1500, vorzugsweise 100 bis 150 vorliegt. Unter "Isocyanatkennzahl" ist hierbei der Quotient der Anzahl der Isocyanatgruppen geteilt durch die Anzahl der gegenüber Isocyanatgruppen reaktionsfähigen Gruppen multipliziert mit 100 zu verstehen. Wesentlich über 100 liegende Isocyanatkennzahlen kommen dann in Betracht, wenn unter gleichzeitiger Mitverwendung von Trimerisierungskatalysatoren die Herstellung von Isocyanurat-modifizierten Polyurethanschaumstoffen angestrebt wird. Das in den erfindungswesentlichen kristallwasserhaltigen Salzen vorliegende Wasser wird nicht in die Berechnung der Isocyanatkennzahl einbezogen.

Die Rohdichte des Polyurethankernes liegt bei mindestens 60, vorzugsweise bei 100 bis 800 kg/m$^3$.

Im allgemeinen beträgt die Temperatur der zu Anwendung gelangenden Formwerkzeuge mindestens 30°C, vorzugsweise mindestens 50°C.

Beispiele

Ausgangsmaterialien

Komponente a):

Polyisocyanatgemisch der Diphenylmethanreihe mit einem NCO-Gehalt von 31 Gew.-% und einem Gehalt an isomeren Diisocyanatodiphenylmethanen von 60 Gew.-% 2,4'-Diisocyanatodiphenylmethanen von 60 Gew.-%, davon 55 Gew.-% 4,4'- und ca. 5 Gew.-% 2,4'-Diisocyanatodiphenylmethan.

Polyolkomponente b1):

Propoxylierungsprodukt von Trimethylolpropan der OH-Zahl 860.

Polyolkomponente b2):

Propoxylierungsprodukt von Trimethylolpropan der OH-Zahl 42.

Zusatzmittel d1 (Stabilisator):

Handelsübliche Polyethersiloxan (®Tegostab OS 50, Hersteller: Goldschmidt AG, 4300 Essen 1).

Zusatzmittel d2 (Katalysator):

N,N-Dimethylcyclohexylamin

Die in Tabelle 1 angegebenen Polyolmischungen werden mit der ebenfalls in Tabelle 1 angegebenen Menge der Polyisocyanatkomponente a) verarbeitet.

Tabelle 1

| (alle Zahlen beziehen sich auf Gewichtsteile) | | |
|---|---|---|
| Komponente (Gew.-Teile) | Beispiele | |
| | 1a-c | 2a-c |
| b1 | 60 | 60 |
| b2 | 40 | 40 |
| d1 | 1 | 1 |
| d2 | 1,5 | 1,5 |
| a | 136 | 136 |
| Wasser | 0,5 | 0,5 |
| Magnesiumammoniumphosphat-Hexahydrat* | 5 | - |

*) pulverförmig max. Teilchendurchmesser: ca. 100 $\mu$m

Unter Verwendung der in Tabelle 1 mitgeteilten Rezepturen wurden plattenförmige Schaumstoff-Formkörper der Rohdichte 200 bis 600 kg/m$^3$ hergestellt. Als Formwerkzeug diente eine Plattenform der Abmessung 10 x 200 x 200 mm, deren eine Innenwand mit einem handelsüblichen äußeren Trennmittel auf Wachsbasis (®Acmosil 180, Hersteller: Acmos, D 2800 Bremen 1) beschichtet worden war. Auf die andere Innenwand wurde die zu prüfende Deckschicht mit Hilfe von Klebeband fixiert.

Vor der Verarbeitung wurden die Polyolmischungen durch kurzzeitiges hochtouriges Rühren (5 Minuten, 1000 UpM, Propellerrührer) mit 10 Vol.-%, bezogen auf Atmosphärendruck, feindisperser Luft beladen.

Die Herstellung der Reaktionsgemische aus den Polyolmischungen und der Polyisocyanatkomponente a) erfolgte unter Verwendung einer üblichen Rührwerksmischvorrichtung. Die Dichte der jeweiligen Formkörper wurde durch die Menge des jeweils in die Form eingetragenen Reaktionsgemisches bestimmt.

In der Tabelle 2 werden die Abreißkräfte (N) zur Entfernung der Deckschichten von geschäumten Formkörpern gemessen. Dazu wurden von 5 cm breiten Prüfkörpern mit Hilfe eines Dynamometers die Deckschichten im Winkel von 135°C abgezogen.

## Tabelle 2

| Rohdichte kg/m³ | Beispiel | | | | | |
|---|---|---|---|---|---|---|
| | 1a | 2a | 1b | 2b | 1c | 2c |
| 200 | - | - | - | - | größer 50 Folie reißt | 20-30 |
| 300 | 85-115 | 65-100 | 100-140 | 10-20 | - | - |
| 600 | 100-130 | 90-120 | - | - | - | - |

Die Abreißkräfte der erfindungsgemäßen Beispiele 1a-c unter Mitverwendung von kristallwasserhaltigen Salzen liegen immer höher als die entsprechenden Vergleichsbeispiele 2a-c.

Beispiele (Tabelle 2)

1a, 1b und 1c erfindungsgemäße Beispiele unter Verwendung von kristallwasserhaltigem Salz.

2a, 2b und 2c Vergleichsbeispiele ohne Zusatz von kristallwasserhaltigem Salz.

In den Beispielen 1a und 2a bestand die Deckschicht aus Aluminiumblech der Dicke 0,2 mm, welches vorab schaumstoffseitig entsprechend der Lehre der DE-AS 26 33 764 mit einem handelsüblichen Haftvermittler auf Basis einer silanhaltigen Polyurethandispersion beschichtet worden war (RC-PUR-Haftvermittler 550 der Firma Rheinchemie Rheinau GmbH, 6800 Mannheim).

In den Beispielen 1b und 2b bestand die Deckschicht aus einem handelsüblichen Skilaminat auf Basis von Glasfaser-verstärktem Polyepoxid (®Polyspeed Typ 160/600 B; Fa. Danutec Werkstoff GmbH, St.-Peter-Str. 25, A-4021 Linz, Österreich).

In den Beispielen 1c und 2c wurden als Folienmaterial eine handelsübliche, mit einem Primer versehene PVC-Folie verwendet.

**Patentansprüche**

1. Verfahren zur Herstellung von Verbundkörpern aus Polyurethanschaumstoffen und als Deckschicht dienenden Flächengebilden durch Formverschäumung eines zu einem Polyurethanschaumstoff ausreagierenden Reaktionsgemischs aus
   a) einer Polyisocyanatkomponente, bestehend aus mindestens einen aromatischen Polyisocyanat,
   b) einer Reaktivkomponente, bestehend aus mindestens einer organischen Verbindung mit mindestens zwei gegenüber Isocyanatgruppen reaktionsfähigen Gruppen,
   c) Treibmitteln und
   d) weiteren Hilfs- und Zusatzmitteln
   unter Einhaltung einer Isocyanatkennzahl von 75 bis 1500, unter Verwendung von Formen, deren Innenwände zumindest teilweise vor Befüllen der Form mit einem als Deckschicht dienenden Flächengebilde ausgekleidet worden sind, dadurch gekennzeichnet, daß man solche Reaktionsgemische verwendet, die als Zusatzmittel d) kristallwasserhaltige Salze in einer Menge von 0,1 bis 15 Gew.-%, bezogen auf das Gewicht der Komponente b), gegebenenfalls neben weiteren Hilfs- und Zusatzmitteln enthalten.

2. Verfahren gemäß Anspruch 1, dadurch gekennzeichnet, daß man als Flächengebilde zur Ausbildung der Deckschicht solche verwendet, die schaumstoffseitig mit einem Haftvermittler vorbehandelt worden sind.

3. Verfahren gemäß Anspruch 1 und 2, dadurch gekennzeichnet, daß man als kristallwasserhaltige Salze d) solche verwendet, die bei 20°C eine Löslichkeit in Wasser von unter 5 g/l aufweisen.

4. Verfahren gemäß Anspruch 1 bis 3, dadurch gekennzeichnet, daß man als kristallwasserhaltiges Salz d) Magnesiumammoniumphosphat mit 6 Mol Kristallwasser pro Mol Salz verwendet.

5. Gemäß Anspruch 1 bis 4 erhaltene Verbundkörper.

**Claims**

1. A process for producing composite bodies from polyurethane foamed materials and sheet products serving as the outer layer by the in situ foaming of a reaction mixture, which reacts out to form a polyurethane foamed material, comprising
   a) a polyisocyanate component consisting of at least one aromatic polyisocyanate,
   b) a reactive component consisting of at least one organic compound containing at least two groups capable of reacting with isocyanate groups,
   c) foaming agents, and
   d) other auxiliary processing agents and additives
   whilst maintaining an isocyanate characteristic number of 75 to 1500, with the use of moulds, the inner walls of which have been at least partially lined with a sheet product serving as an outer layer before filling the mould, characterised in that reaction mixtures are used which contain salts containing water of crystallisation as additives d), in an amount of 0.1 to 15 % by weight with respect to the weight of component b), optionally in addition to further auxiliary processing agents and additives.

2. A process according to claim 1, characterised in that sheet products which have been pretreated on the foamed material side with a bonding agent are used as the sheet products for forming the outer layer.

3. A process according to claims 1 and 2, characterised in that salts containing water of crystallisation which have a solubility in water less than 5 g/l at 20°C are used as the salts containing water of crystallisation d).

4. A process according to claims 1 to 3, characterised in that magnesium ammonium phosphate containing 6 moles of water of crystallisation per mole of salt is used as the salt containing water of crystallisation d).

8

5. Composite bodies obtained according to claims 1 to 4.

**Revendications**

1. Procédé pour la fabrication de corps composites consistant en mousses de polyuréthannes et articles planiformes servant de couches de couverture par gonflement en moule d'un mélange réagissant avec formation d'une mousse de polyuréthanne, ce mélange consistant en
   a) un composant polyisocyanate consistant en au moins un polyisocyanate aromatique,
   b) un composant réactif consistant en au moins un composé organique à au moins deux groupes réactifs avec les groupes isocyanate,
   c) des agents porogènes, et
   d) d'autres produits auxiliaires et additifs,
   à un indice d'isocyanate de 75 à 1 500 avec utilisation de moules dont les parois intérieures ont été revêtues, en partie au moins, avant moulage, d'un article planiforme servant de couche de couverture, ce procédé se caractérisant en ce que l'on utilise de tels mélanges de réaction contenant en tant qu'additifs d) des sels qui contiennent de l'eau de cristallisation, en quantité de 0,1 à 15% du poids du composant b), le cas échéant avec d'autres produits auxiliaires et additifs.

2. Procédé selon la revendication 1, caractérisé en ce que, pour la formation des couches de couverture, on utilise des articles planiformes traités au préalable, sur la face tournée vers la mousse, par un agent d'adhérence.

3. Procédé selon les revendications 1 et 2, caractérisé en ce qu'on utilise des sels contenant de l'eau de cristallisation d) qui ont, à 20°C, une solubilité dans l'eau inférieure à 5 g/l.

4. Procédé selon les revendications 1 à 3, caractérisé en ce que l'on utilise, en tant que sel contenant de l'eau de cristallisation d), du phosphate ammoniacal de magnésium à 6 mol d'eau de cristallisation par mole du sel.

5. Corps composites obtenus selon les revendications 1 à 4.